# EUROPEAN PATENT APPLICATION

(11) **EP 4 417 390 A1**
(43) Date of publication of application: **21.08.2024**
(21) Application number: 23156718.1
(22) Date of filing: 15.02.2023
(51) Int. Cl.: B29C 43/20, B29C 43/36, B29C 33/12, B29C 48/00, B29C 33/30, B29C 43/34, B29C 33/00, B29K 105/00, B29K 105/26, B29L 9/00, B29L 31/00

(54) **METHOD FOR PRODUCING A MULTILAYER OBJECT AND DEVICE**

(71) Applicant: Aisapack Holding SA, 1896 Vouvry (CH)
(72) Inventor: THOMASSET, Jacques, 74500 Neuvecelle (FR)
(74) Representative: Grosfillier, Philippe

(57) **Abstract**

The invention relates to a method for covering at least the periphery of a functional layer by a first layer, said layers being included in a multilayer dose intended to form an object by compression-moulding, said method comprising at least the following steps:
-) deformation of the dose;
-) at the same time as the deformation of the dose, temporary blocking of the propagation at least of the functional layer so as to form a bead of material from the first layer by propagation of material;
-) ceasing the temporary blocking.

## Description

### Field of the invention

The present invention relates to a method for producing multilayer objects by compression-moulding a multilayer dose consisting of a molten resin.

### Prior art

Patent document JP4169207 describes a method for producing a multilayer object by compressing, in a mould, a dose the layers of which are positioned at right angles to the compression axis. According to this method, a dose in the shape of a coin and formed of a stack of several films is placed in a mould. A film positioned at the centre of the multilayer structure has reduced permeability. The invention described in patent document JP4169207 consists in forming a multilayer object by compressing the dose in the mould and trapping the ends of the layer inside the object. In order to trap the ends of the central film, patent document JP4169207 proposes compressing the dose at a temperature above the melting point of the films and below the melting point of the central film. Patent document JP4169207 describes, by way of example, a dose formed of films made of polyethylene with the central film made of polyamide. The method described in patent document JP4169207 has a number of disadvantages. According to patent document JP4169207, the central film is in the solid state at the time of moulding because the moulding temperature is below the melting point of said film. As a result, the central film undergoes little or no deformation at the time of moulding. The method described in patent document JP4169207 makes it difficult for the central film forming the functional layer to propagate as far as the end of the object. This method also entails producing, heating and transferring into the cavity of the mould, a flat dose of slender thickness. The operations involved in producing and handling the dose are insufficiently disclosed in the Japanese patent and it would appear difficult for this method to be used to manufacture objects at high production rates.

Patent US4904512 describes a multilayer object produced by compression-moulding a multilayer dose. This patent proposes the use of a cylindrical dose comprising a functional layer fully trapped between the layers of resin. The ends of the functional layer are trapped within the dose by virtue of an extrusion method allowing discontinuous supply of the functional layer. However, the compression of the dose in the mould is not described in patent US4904512. For example, the dimensions of the dose and how it is positioned in the cavity of the mould are not mentioned. The description of the invention does not state how the dose is compressed. The solution described in patent US4904512 nonetheless presents a number of problems. As described in said patent, a co-extrusion device with a shut-off valve mechanism for the functional resin controls the intermittent flow of said functional resin. However, such shut-off valve mechanisms are complex and expensive and do not provide sufficiently precise control over the intermittent flow at high production rates.

Published PCT WO2008/096290 proposes a method for manufacturing a multilayer object in synthetic resin by compression-moulding a dose of multilayer molten resin including at least one functional layer, each layer of the dose being in the molten state during compression. The method consists in co-extruding resins through a mould, cutting the extrudate periodically so as to obtain a dose, then depositing the dose in the molten state in the cavity of a mould. The method thus defines in the dose a direction of extrusion and an arrangement of the functional layer parallel to the direction of extrusion. In the method, the dose is compressed along an axis of compression which intersects the direction of extrusion. This publication also relates to an object obtained with the aforementioned method, a dose used in the context of this method and a device for implementing said method. The advantage of this method is that it allows the production of moulded multilayer objects at high production rates, with a thin functional layer well distributed throughout the object. However, this method does not make it possible to completely prevent the presence of a functional layer at the surface of the moulded objects.

Compared to the teaching of the prior art, the originality of the method according to the invention described in WO2008/096290 lies in the production by extrusion of a multilayer dose together with compression thereof in a direction passing through the layers.

Other publications disclose examples of devices and methods for manufacturing objects, such as packaging, from a dose which is subjected to compression-moulding, for example: WO2017064601, WO2020075020, WO2020121190, WO2021070031, WO2021074819, WO2021234617, WO2022029668.

### Subject matter of the invention

One aim of the present invention is to improve the known methods and devices.

Another aim of the present invention is to propose a simple device and method with which an object can be formed by compression-moulding, said object comprising at least one functional layer (such as for example a barrier layer) encapsulated in the material of the object.

The present invention also has the aim of producing multilayer objects by compression-moulding while overcoming the problems found in the prior art. The invention consists in particular in encapsulating the functional layer(s) by temporarily blocking the propagation of said functional layer(s) while (in other words during) deforming the dose.

### Summary of the invention

The invention relates to a compression-moulding method making it possible to prevent functional materials (such as those forming the functional layer(s), for example) appearing at the surface of an object manufactured by compression-moulding at high production rates, using multilayer doses.

In particular, the invention makes it possible to encapsulate in the objects manufactured the functional layer(s) which are not desired at the surface of the object once manufactured even though this functional layer is present at the surface (for example on the side edge) of the dose before the deformation by compression-moulding of said dose.

A functional layer may be, for example, a barrier layer.

A functional layer may be composed of several layers. To ensure adhesion between layers of different natures, thin layers of adhesive are generally positioned on either side of the barrier layer. In this example, the functional layer is made up of three layers, in other words two adhesive layers and a barrier layer.

The functional layer may also be a layer of recycled material or a layer which it is not desired to have on the internal or external surface of the object (for example for food-related or aesthetic reasons).

The invention comprises in particular the performance of an encapsulation operation in which the propagation of the end of the functional layer is blocked at least temporarily during the deformation of the dose; this has the effect of accumulating a sufficient volume of material (able to form the surface of the object) upstream of the functional layer, referred to as a bead in the present disclosure of the invention, said bead having the effect of encapsulating the functional layer during the process in such a way that it is not present at the surface of the object formed by compression-moulding. More specifically, according to the method, a portion of the dose is deformed while at least the propagation of the end of the functional layer is blocked during this deformation of the dose: this allows the formation of the "bead" of material created by the partial deformation of the dose. The blocking of the propagation of the functional layer is then removed, the compression of the entire dose including the bead continues and said bead of material is used to cover the functional layer during the process of compression-moulding, for example by covering the functional layer present at the surface of the dose.

According to embodiments of the invention, the encapsulation operation is carried out during the compression-moulding process.

According to embodiments of the invention, the encapsulation operation is carried out prior to the compression of the dose in the mould.

According to embodiments of the invention, the encapsulation operation is carried out during transfer of the dose into the mould.

According to embodiments of the invention, the encapsulation operation comprises the temporary blocking of the propagation of the functional layer by preventing the propagation of a portion of the flow front of the dose during the deformation of the dose.

According to embodiments of the invention, the encapsulation operation is carried out in particular by temporarily blocking the propagation of the volume of the dose containing the functional layer. According to the invention, the volume of the dose which is not blocked forms a bead of material which will be used to encapsulate the functional layer, for example as part of the process of compression-moulding in the mould.

According to embodiments of the invention, at least the following successive steps are carried out:
- Creation of a multilayer dose;
- Transfer of the dose into the mould;
- Encapsulation operation comprising:
   ∘ Temporarily blocking the propagation of the functional layer while at the same time compression-moulding the dose;
   ∘ Ceasing to block the functional layer;
- Continuation and completion of the operation of compression-moulding of the dose;
- Demoulding the object.

According to embodiments of the invention, at least the following successive steps are carried out:
- Creation of a multilayer dose;
- Transfer of the dose into the mould;
- Incomplete moulding of the object by partial compression of the dose;
- Encapsulation operation comprising:
   ∘ Temporarily blocking the propagation of the functional layer while at the same time continuing the operation of compression-moulding of the dose;
   ∘ Ceasing to block the functional layer;
- Continuation and completion of the operation of compression-moulding of the dose;
- Demoulding the object.

According to embodiments of the invention, at least the following successive steps are carried out:
- Creation of a multilayer dose;
- Encapsulation operation comprising:
   ∘ Temporarily blocking the propagation of the functional layer at the same time as deformation by compression of the dose before, during or after the operation of transferring the dose into the mould;
- Compression-moulding of the dose transferred into the mould (while temporarily keeping up blocking of the propagation of the functional layer, or not);
- Demoulding the object.

According to embodiments of the invention, at least the following successive steps are carried out:
- Creation of a multilayer dose;
- Encapsulation operation comprising:
   ∘ Temporarily blocking the propagation of the functional layer at the same time as deformation by compression of the dose during the operation of transferring the dose;
   ∘ Ceasing to block the functional layer;
   ∘ Continuation and completion of the operation of compression of the dose during the transfer and obtaining of the modified dose;
- Compression-moulding of the modified dose transferred into the mould (while temporarily keeping up blocking of the propagation of the functional layer, or not)
- Demoulding the object.

As can be seen from the various embodiments described, the encapsulation operation may be carried out in the compression-moulding mould, or in the transport means used to transfer the dose created into the mould, or even before said transfer (directly after the creation of the dose) or partially at different times, for example (a partial encapsulation operation during transfer and a second encapsulation operation in the mould, or before transfer and in the mould etc., all combinations being envisageable). Preferably, a hardening of the dose will be avoided.

It is important that the dose retains its flow properties for the operation of moulding by compression. Depending on the nature of the materials used, means may be used to prevent hardening of the dose following the encapsulation operation. These means depend on the nature of the materials used and may comprise for example of heating means, cooling means, or additives added to the material.

For example, if the materials constituting the dose are thermoplastic resins, heating means may be used to prevent the dose from cooling. For example, the encapsulation tools may be set to a temperature that avoids cooling the dose. Means may also be used to heat the dose after encapsulation. In general, it is advantageous to perform the encapsulation operation quickly, this limiting the change in the flow properties of the dose and avoiding the use of heating means.

For example, if the materials constituting the dose are thermosetting resins, heating of the dose during the encapsulation operation will conversely be avoided and cooling means may be used during the encapsulation operation.

In the description of the invention, the thickness of the dose is defined as the distance measured perpendicularly to the plane defined by the functional layer.

According to embodiments of the invention, the position of the functional layer in the dose is modified by the operation of encapsulation of said functional layer resulting from the method of compression-moulding according to the present invention.

According to embodiments of the invention, the position of the functional layer in the initial dose (in other words, the dose before encapsulation) is not located half-way through the thickness of the dose, whereas the position of the functional layer after encapsulation in the final object is approximately half-way through the thickness of the object.

According to embodiments of the invention, the position of the barrier layer in the initial dose is located at between 5% and 50% of the thickness and preferably between 10% and 30%.

According to embodiments, the direction of compression is preferably perpendicular to the functional layer in the initial dose.

According to embodiments of the invention, the initial dose has a geometry similar to that of a rectangular base parallelepiped, said dose being compressed in a direction perpendicular to said rectangular base and the functional layer being parallel to said rectangular base. According to a preferred embodiment, the geometry of the initial dose is similar to that of a square base parallelepiped.

According to other embodiments of the invention, the initial dose has a cylindrical geometry with a circular or oval base, said dose being compressed in a direction perpendicular to the circular or oval base and the functional layer being parallel to said base.

According to other embodiments of the invention, the initial dose has a cylindrical geometry with a circular or oval base, said dose being compressed in a direction parallel to the base of the cylinder and the functional layer being perpendicular to said base.

According to other embodiments of the invention, the initial dose has an annular geometry with a circular or oval base, said dose being compressed in a direction perpendicular to the circular or oval base and the functional layer being parallel to said base.

According to other embodiments of the invention, the initial dose has an annular geometry with a circular or oval base, said dose being compressed in a direction parallel to the base of the cylinder and the functional layer being perpendicular to said base.

According to embodiments, the invention relates to a method for covering at least the periphery of a functional layer by a first layer, said layers being included in a multilayer dose intended to form an object by compression-moulding, and the method comprises at least the following steps:
- ) deformation of the dose;
- ) at the same time as the deformation of the dose, temporary blocking of the propagation at least of the functional layer so as to form a bead of material from the first layer by propagation of material of the first layer;
- ) ceasing the temporary blocking.

In some embodiments, only the propagation of the functional layer may be blocked, and in other embodiments the propagation of the functional layer and also of one (or several) other layer(s) of the dose may be blocked.

According to embodiments, the deformation of the dose may be produced by compression of the dose.

According to embodiments, the compression of the dose may be carried out over the whole surface of the dose or over a portion of the surface of the dose.

According to embodiments, the direction of compression intersects a plane parallel to the functional layer, for example perpendicularly or at an angle.

According to embodiments, the deformation of the dose may be carried out by heating at least the first layer or by another equivalent method or by a combination (e.g. heating and compression).

According to embodiments, said steps may be carried out during transfer of the dose by transport means and/or once the dose has been deposited in a device for compression-moulding.

According to embodiments, an additional step of deformation of the dose may be carried out prior to the joint steps of deformation and temporary blocking.

According to embodiments, deformation of the dose is continued after temporary blocking ceases, to form an object.

According to embodiments, deformation is continued by compression-moulding.

According to embodiments, the dose may comprise at least two functional layers and/or the functional layer(s) may form a significant proportion of the dose.

According to embodiments, the functional layer may be a barrier layer and/or a layer made of recycled material.

According to embodiments, the functional layer(s) may be entirely covered at least by the first layer.

According to embodiments, the temporary blocking means may be located on the transport means and/or on the punch and/or on the mould.

According to embodiments, the deformation of the dose may be carried out by a punch and a mould at least during the compression-moulding for obtaining the object.

According to embodiments, the invention relates to a device for implementing the method described and intended to form an object from a multilayer dose of materials, the dose comprising at least one functional layer and a first layer, the device comprising means for transporting the dose, means for compressing the dose, means for forming the dose by compression-moulding and means for temporarily blocking the propagation of the functional layer, such as for example encapsulation means.

According to embodiments, the means for deforming the dose and the means for temporarily blocking the propagation of the functional layer are located on the means for transporting the dose.

According to embodiments, the means for temporarily blocking the propagation of the functional layer are located on the mould and/or on the punch.

According to embodiments, the punch comprises an internal portion and an external portion, said portions being movable relative to one another so as to form said means for temporarily blocking the propagation of the functional layer.

Other embodiments will emerge from the description and the figures of the present application.

### Detailed description of the invention

The invention will be better understood below through a detailed description of some examples illustrated by the following figures.

### Brief description of the figures

Figures 1 to 16 show embodiments of the invention.
Figures 1 to 4 show a first example of an encapsulation method performed during the compression-moulding operation.
Figures 5 to 7 show a second example of an encapsulation method performed during the compression-moulding operation.
Figures 8 to 11 show a third example of an encapsulation method performed during the compression-moulding operation.
Figure 12 shows an example of a multilayer dose having a geometry similar to that of a square base parallelepiped. Note that the barrier layer is not centred in the thickness prior to the encapsulation operation.
Figures 13 to 17 show an example of an encapsulation method performed during the operation of transferring the dose.
Figures 18 to 22 show an example of an encapsulation method comprising two encapsulation elements for blocking the propagation of layers of the dose.
Figure 23 shows another example of an encapsulation device comprising two encapsulation elements for blocking the propagation of layers of the dose.
Figure 24 shows an embodiment with two encapsulation elements in a moulding system.
Figures 25 to 27 show another embodiment of the invention in which the method for encapsulation of the functional layer is not performed on the initial dose at the start of the compression method, but in the middle of the compression-moulding method.
Figures 28 to 30 show another embodiment of the invention in which the method for encapsulation of the barrier layer is performed at the end of the compression-moulding method.
Figures 31 and 32 illustrate the principle of the encapsulation method according to the present invention for doses including several functional layers.
Figures 33 to 36 show, in a view parallel to the axis of compression of the dose, examples of the geometry of encapsulation elements for a multilayer dose in the form of a square or rectangular base parallelepiped.
Figures 37 to 40 show examples in which the functional layer constitutes a significant proportion of the dose and of the object manufactured.
Figure 41 illustrates the principle of encapsulation according to the present invention for doses including a hole and a functional layer arranged perpendicularly to the axis of the hole.
Figures 42 and 43 illustrate the principle of encapsulation according to the invention for doses including a hole and a functional layer arranged parallel to the axis of the hole.
Figure 43 shows an example of an encapsulation method which deforms the dose radially by means of a deformation element.

### Detailed description of the figures

### List of reference numerals

1: dose
2: cavity of the mould
3: moulding device
4: punch
5: mould
6: encapsulation element
7: bead
8: position of the barrier layer
9: thickness of the dose
10: transport device
11: support element
12: deformation element
13: moulded object
16: encapsulation element
20: functional layer of the dose
20': second functional layer of the dose
21: first layer of the dose
22: second layer of the dose
22': third layer of the dose

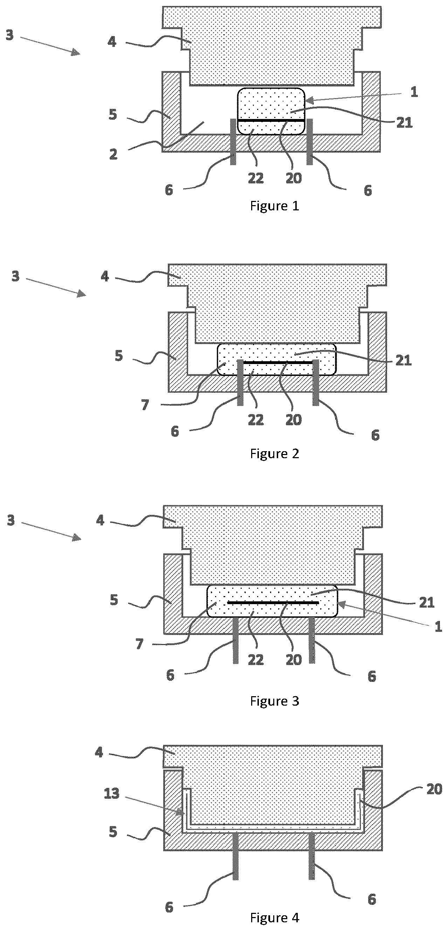

Figures 1 to 4 show a first embodiment of a method for manufacturing objects and the means used to this end according to the present invention.

In this embodiment and according to the principles of the present invention, a dose 1 is brought to a cavity 2 of a moulding device 3. The dose 1 is preferably a multilayer dose which comprises in particular a first layer ("functional" layer) 20 placed between two other layers 21, 22 (for example resin layers) and this dose 1 is for example obtained by extrusion as described in publication WO2008/096290. Each layer 20, 20', 21, 22 and 22' may be monolayer or multilayer.

Said dose 1 is placed in the cavity 2 of the moulding device 3 and is intended to be compressed between a punch 4 and a mould 5 which move relative to one another in a direction perpendicular to the layers 20, 20', 21, 22 and 22' of the dose 1 so as to form the desired object by the compression-moulding method. The position of the mould 5 below the punch 4 is illustrative and the whole may be rotated by 180° with the punch 4 placed above the mould 5. Naturally, other positions are possible.

In the moulding device 3, the dose 1 is held in an encapsulation element 6 which partially surrounds said dose 1 in that the walls of said element 6 cover at least the edges of the dose where the functional layer 20 is visible at the surface of said dose 1 (for example on the side edge of the dose 1) as shown in Figure 1. This encapsulation element 6 makes it possible to keep a portion of the dose 1 unchanged while another portion of the dose undergoes a deformation, for example by being compressed owing to the relative movement of the punch 4 and the mould 5 towards one another. In the example of Figure 1, it is the layer 21 of the dose 1 which is compressed and is deformed so as to create a bead 7 which covers the encapsulation element 6 as shown in Figure 2.

Next, according to the method, the encapsulation element 6 is removed from the moulding device 3 (for example from the mould) and the functional layer 20 is covered by the bead 7, thus forming a dose 1 in which the functional layer 20 is completely embedded (or encapsulated) in the other layers 21 and 22 as shown in Figure 3. The process of compression is continued (by compression-moulding) and the dose 1 is transformed into the desired object 13 as shown in Figure 4, the functional layer 20 still being trapped (or encapsulated) in the layers 21 and 22 of the dose 1.

As can be seen in Figure 1, the functional layer 20 is located in the bottom half of the dose 1, in other words the layer 21 is thicker than the layer 22 (see the proportions given above): for this reason, the bead 7 is preferably formed in the thickest layer (in this case the layer 21).

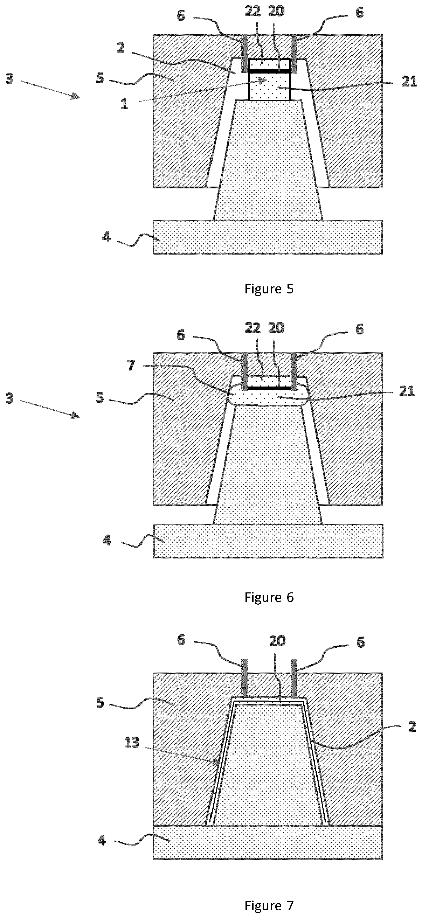

Figures 5 to 7 show another embodiment of the present invention. As can be seen in Figure 5, a moulding device 3 has a mould 5 and a punch 4 on which is deposited a dose 1 of material comprising the layers 20, 21, 22, the layer 20 being a functional layer. The mould 5 includes an encapsulation device 6 which surrounds the dose 1, at least up to the height of the functional layer 20 as shown in Figure 5.

The process of compression-moulding the dose 1 is implemented by a relative movement of the punch 4 towards the mould 5, and the compression of said dose 1 deforms same, and owing to the presence of the encapsulation element 6, forms the beads 7 from the layer 21 which undergoes deformation resulting from the compression, as shown in Figure 6.

In Figure 7, the encapsulation element 6 is removed and the process of compression-moulding continues so as to form the desired object 13 in which the functional layer 20 is entirely trapped in the layers 21 and 22.

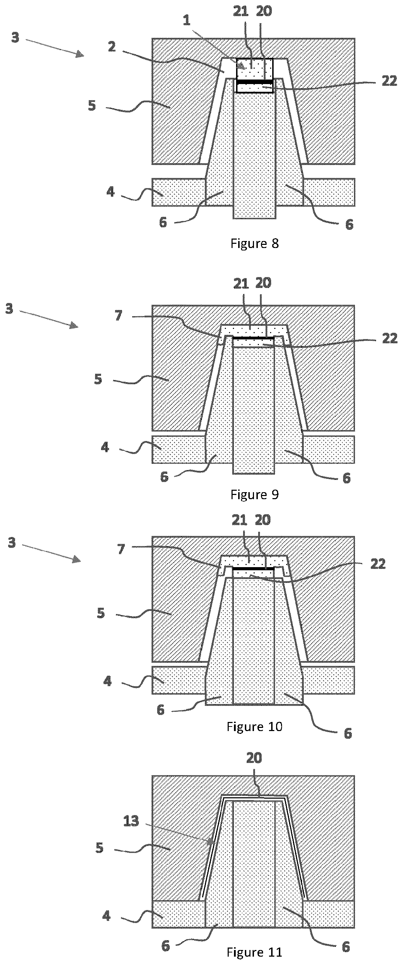

Figures 8 to 11 show another embodiment of the invention. This embodiment is similar to that shown in Figures 5 to 7, except that the encapsulation element 6 is formed in the punch 4, by the two portions of said punch 4. As shown in Figure 8, a dose 1 is deposited on the punch 4, said dose comprising several layers 20, 21, 22, the layer 20 being a functional layer as described above. In this embodiment, the encapsulation element 6 is formed by a particular structure of the punch 4 which comprises an external portion and an internal portion, said internal portion sliding in the external portion. Figure 8 shows an embodiment in which the dose 1 is deposited on the internal portion of the punch 4 and the position of the internal portion relative to the external portion is such that it is the external portion of the punch which forms the encapsulation element 6 for the dose 1. The end of the external portion covers the dose 1 at least partially, in particular the functional layer 20 according to the principles of the present invention.

In Figure 9, the punch 4 and the mould 5 are brought closer to one another so as to compress the dose 1 and to deform same. As shown in Figure 9, this deformation has the consequence of creating a bead 7 between the punch 4 and the mould 5.

As shown in Figure 10, the internal and external portions of the punch 4 are moved relative to one another so as to press on the encapsulation element. Preferably, it is the external portion of the punch 4 which is moved while the internal portion stays in the same position so as to hold the dose 1.

Next, as shown in Figure 11, the action of compression-moulding is continued in order to form the desired object 13 in which the functional layer 20 is trapped and is not visible at the surface of the object 13.

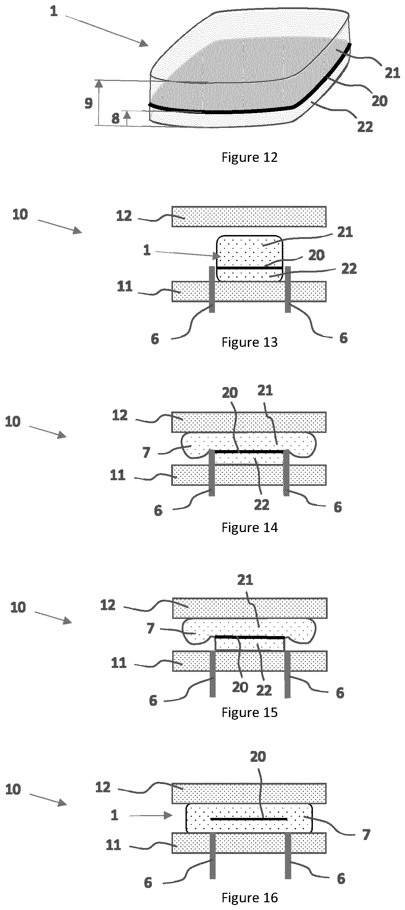

Figure 12 shows an example of a multilayer dose which can be obtained by the continuous extrusion of a multilayer strip which is cut perpendicularly to the direction of extrusion of said strip. In this example, the dose 1 comprises several layers 20, 21, and 22, including a functional layer 20. Each layer 20, 21 and 22 may be monolayer or multilayer. As shown in Figure 12, the dose 1 has a geometry close to that of a square base parallelepiped with a thickness 9 and a position 8 of the functional layer 20. This type of dose is particularly advantageous for use in producing packaging with a surface of revolution (coffee capsules, for example) at high production rates.

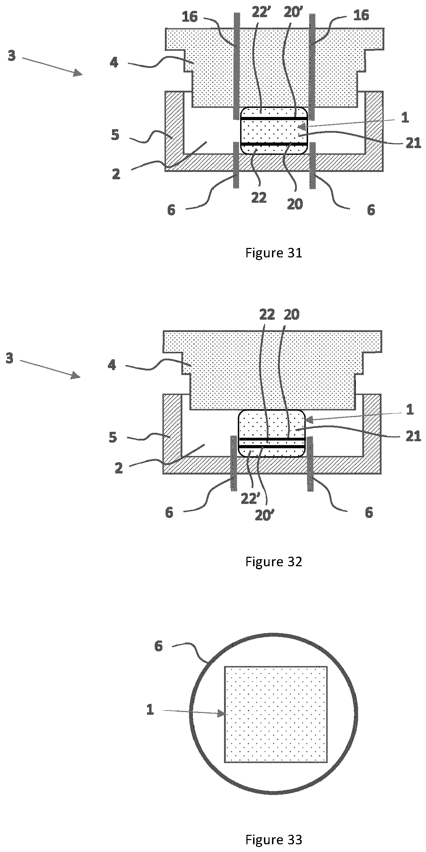

The invention is not limited to the example of the dose shown in Figure 12. The invention may be used for multiple dose geometries, such as for example doses having a circular or oval or rectangular base (see, for example, Figures 33 to 36).

Figures 13 to 17 show another embodiment of the invention in which the dose is compressed during its transfer to a mould according to the principles of the present invention.

The dose 1 is deposited on a support element 11, in an encapsulation element 6 which surrounds the dose at least up to the height of the functional layer 20.

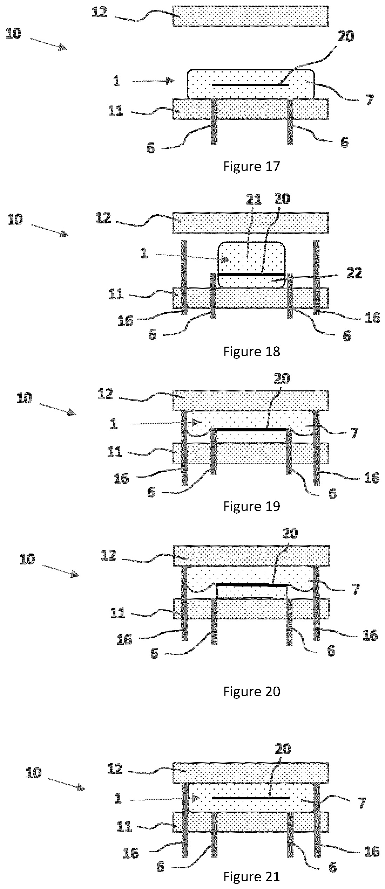

The dose 1 is compressed by relative movement of the support element 11 and a deformation element 12, this compression creating a bead 7 covering the encapsulation element 6, see Figure 14. Next, the encapsulation element 6 is removed, see Figure 15, and the compression of the dose 1 is continued with the functional layer 20 trapped in the layers 21 and 22, see Figure 16. Lastly, a dose 1 deformed by compression is obtained in the transfer system, see Figure 17, and this dose may then be deposited in a moulding device for the continuation and completion of the compression-moulding method and the formation of the desired object 13.

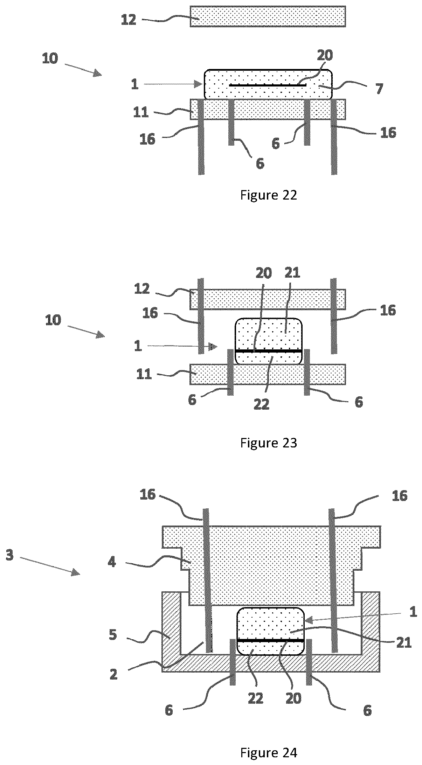

Preferably, the moulding device used after a transfer operation in which the dose has undergone the encapsulation step does not need to comprise an encapsulation element as described in the present application and the dose 1 of Figure 17 may be subjected directly to a compression-moulding process. In other embodiments, an encapsulation step may nevertheless be performed on a dose which has undergone a first encapsulation during its transfer (for example doses 1 of Figures 17 and 22): this may be the case if the encapsulation during transfer is only partial or insufficient (transfer time too short, for example). In other embodiments, it is possible to carry out several successive encapsulations of the same dose.

Figures 18 to 23 show embodiments in which the transport device 10 comprises two encapsulation elements 6 and 16. Operation is similar to that shown and described with reference to Figures 13 to 17 for the first encapsulation element 6 and the second encapsulation element 16 makes it possible to limit the shape of the bead 7 created, see Figures 19 to 21. To be more specific, it can be seen in Figure 20 that the first encapsulation element 6 is removed whereas the second 16 remains in place (Figures 20 and 21) while compression of the dose continues. At the end of the encapsulation process (Figure 22), the two encapsulation elements 6 and 16 are removed so that the dose 1 can be deposited in a moulding device so as to undergo therein the process of compression-moulding and the formation of the desired object 13.

In the embodiments of Figures 18 to 22, the encapsulation elements 6 and 16 are located on the support element 11, whereas in Figure 23, one encapsulation element 6 is located on the support element 11 and the other encapsulation element 16 is located on the deformation element 12.

Figure 24 shows an embodiment in which the moulding device comprises two encapsulation elements 6 and 16. Operation is similar to that described in Figures 18 to 23.

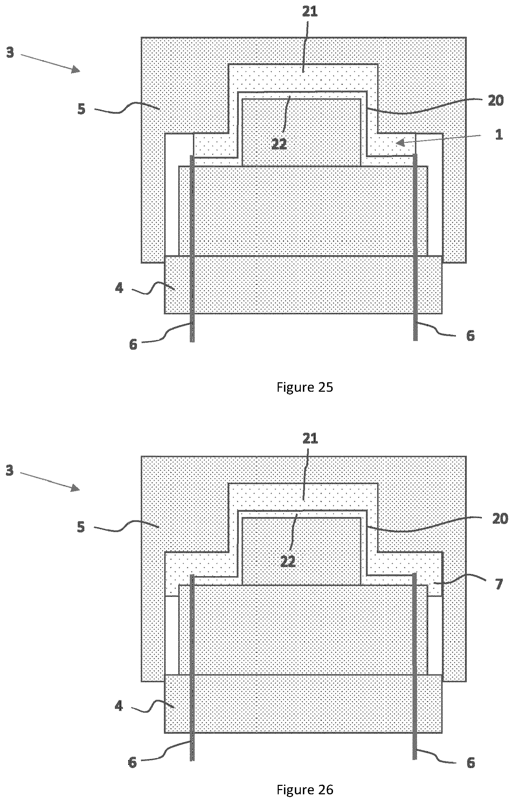

Figures 25 to 27 show an embodiment in which the method of encapsulation of the functional layer is not performed on the initial dose 1 at the start of the compression-moulding method, but during the compression-moulding method (for example in the middle or at the end).

As shown in Figure 25, the dose 1 undergoes a step of compression-moulding between the punch 4 and the mould 5 by relative movement of these two components towards one another. At a predetermined instant, the encapsulation element 6 is brought into service to block the progression or propagation of the functional layer 20 (see Figure 25). The compression-moulding process is then continued and a bead of material 7 is thereby formed, see Figure 26.

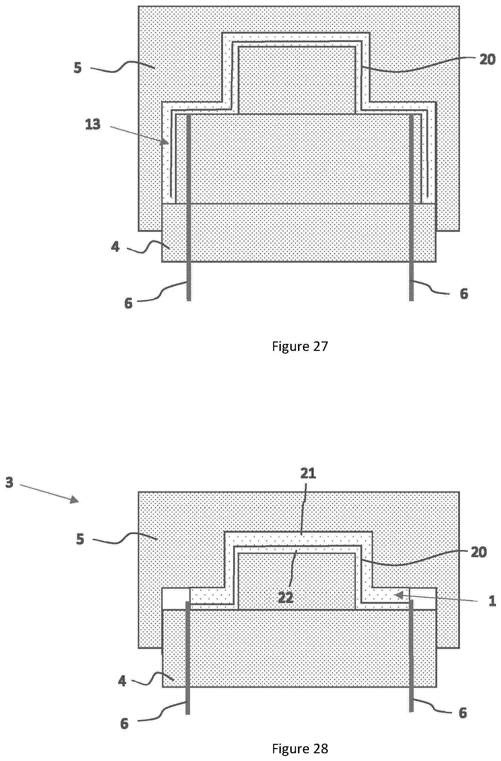

Next, the encapsulation element 6 is removed and the process of compression-moulding is continued with the functional layer 20 trapped, until the desired object 13 is obtained, see Figure 27.

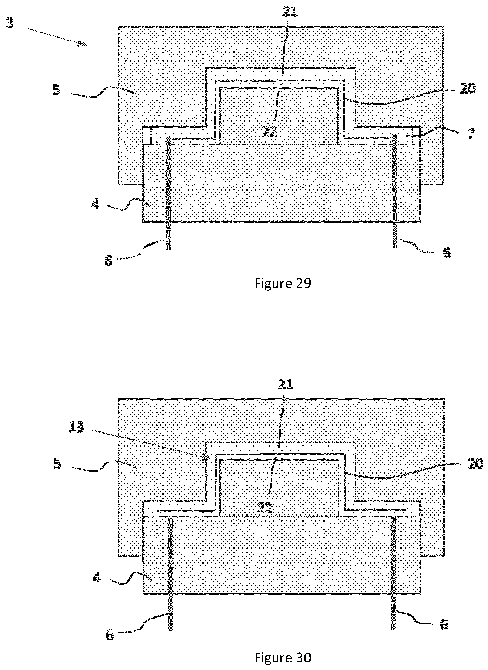

Figures 28 to 30 show another embodiment in which the method of encapsulation of the functional layer 20 is carried out at the end of the compression-moulding process so as to obtain an object 13 in which the functional layer 20 is trapped. As shown in Figure 28, the dose 1 undergoes a step of compression-moulding between the punch 4 and the mould 5 by a relative movement of these two components towards one another. At a predetermined instant, the encapsulation element 6 is brought into service to block the progression or propagation of the functional layer 20 (see Figure 28). The compression-moulding process is then continued and a bead of material 7 is thereby formed, see Figure 29.

Figures 31 and 32 show the principle of encapsulation for doses including several functional layers 20, 20'.

In Figure 31, the functional layers 20, 20' are at a distance from one another and in this case use is preferably made of one encapsulation element 6 on the mould 5 and another encapsulation element 16 on the punch. The principle of operation is the same as described above: in a first phase, the relative movement of the punch 4 and of the mould 5 towards one another forms a bead of material from the layer 21 while the propagation of the layers 22, 22', 20 and 20' is blocked by the encapsulation elements 6 and 16. Once the bead of material has covered the encapsulation elements 6 and 16 (as shown in Figure 2), they are removed and the compression-moulding process is continued with the layers 20 and 20' encapsulated as described above and shown in the figures.

In Figure 32, another embodiment is shown with two functional layers 20, 20' close to one another such that the method of encapsulation may be performed with a single encapsulation element 6 as shown in Figure 32. The process is similar to that shown in Figures 1 to 4 and described above, bearing in mind that the progression of two functional layers must be blocked temporarily.

Figures 33 to 36 show examples of the geometry of the encapsulation element 6 (or 16) and of the doses 1 seen along the axis of compression of the dose. The choice of the geometry selected for the encapsulation element 6, 16 is linked for example to the geometry of the dose 1 and of the object to be manufactured 13.

Figure 33 shows an example of a dose 1 with a square base used to produce an object with a circular base (the object has a surface of revolution about the axis of compression). To produce this object, an encapsulation element 6 of circular geometry is preferably used as this allows, together with the encapsulation of the functional layer, modification of the geometry of the dose after the step of encapsulation. The encapsulation operation changes the square base of the initial dose 1 to a circular base, which ultimately results in a more homogeneous distribution of the functional layer in the object 13.

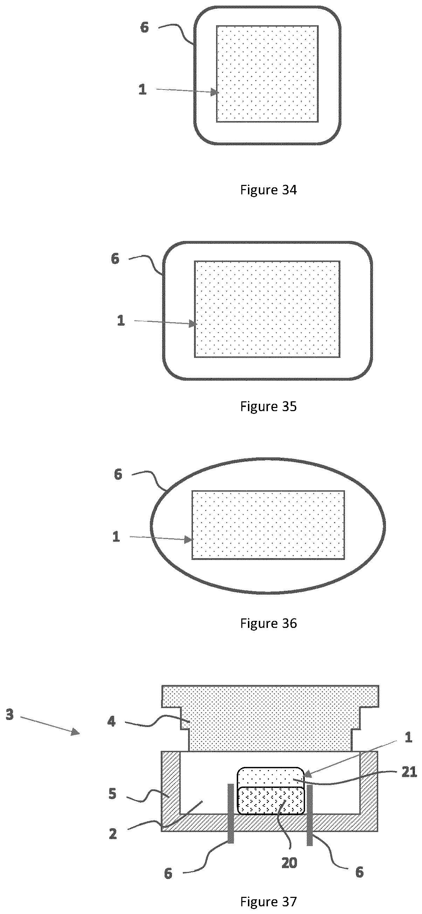

Figure 34 shows an example of a dose 1 with a square base used to produce an object 13 also having a square base (projection in the plane perpendicular to the axis of compression). In this case, an encapsulation element 6 of square geometry as shown in Figure 34 is preferably used to optimize the distribution of the functional layer in the object 13.

Figure 35 shows an example of a dose 1 with a rectangular base and an encapsulation element 6 which is also rectangular to produce an object 13 having a rectangular base.

Figure 36 shows an example of a dose 1 with a rectangular base and an oval encapsulation element 6 to produce an object 13 having an oval base.

A dose with a rectangular base is the easiest to obtain industrially but doses with bases of other shapes (such as for example round or oval) are of course possible.

Figures 37 to 40 show examples in which the functional layer 20 constitutes a significant proportion of the dose 1 and of the object manufactured 13, the functional layer 20 being for example made of recycled material.

Figures 37 to 39 show a first example in which the functional layer 20 must not be present on the internal surface of the object 13 (which is for example packaging intended to contain food). In this example, the functional layer 20 constitutes the majority of the dose 1 and the object 13. The material of the layer 21 which forms the bead 7 prevents the functional layer 20 from being present on the internal surface of said object 13, for example so as to prevent contact between a product contained in the object (which may be packaging or a portion of packaging) and the functional layer made of recycled material. The method of encapsulation and of compression-moulding implemented is similar or even identical to that described above in the various embodiments and the encapsulation may be carried out as described above and shown in Figures 1 to 32.

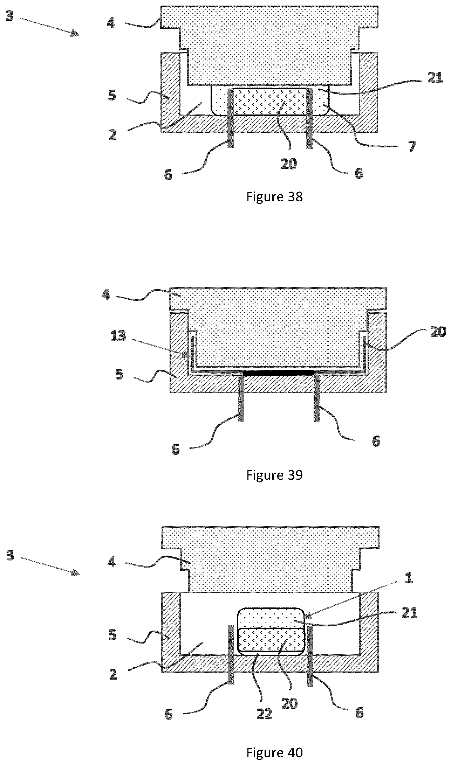

Figure 40 shows a second example in which the functional layer constitutes the majority of the dose 1 and the object 13. The dose 1 proposed and the system of encapsulation make it possible to obtain an object 13 in which the functional layer 20 is not at all present at the surface of the object 13 (internal and external surfaces), thanks to the presence of the layer 22 (which is absent in the example of the dose 1 of Figure 37). This configuration is particularly advantageous for manufacturing objects with absolutely no recycled material present at the surface of said objects. The method of encapsulation and of compression-moulding implemented is similar or even identical to that described above in the various embodiments and the encapsulation may be carried out as described above and shown in Figures 1 to 32.

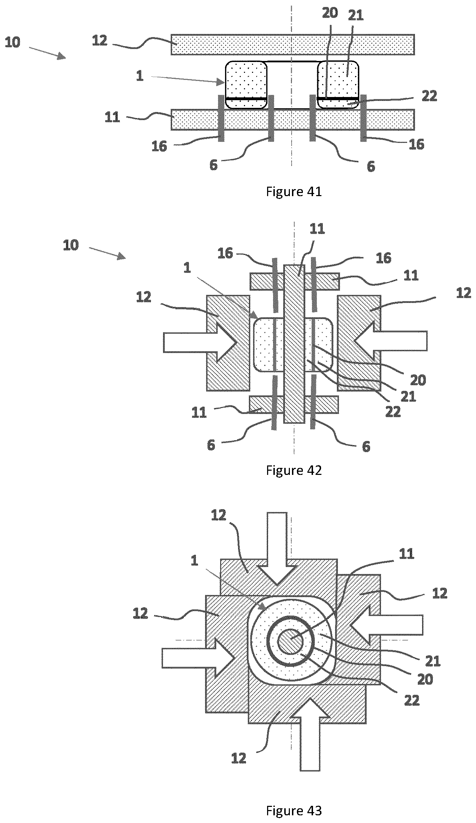

Figure 41 illustrates the principle of encapsulation according to the present invention for doses 1 including a hole and a functional layer 20 arranged perpendicularly to the axis of the hole. For a dose comprising a hole, the principle is the same as described above and use is made for example of the encapsulation elements 6 and 16 to prevent the propagation at least of the functional layer 20.

Figures 42 and 43 illustrate the principle of encapsulation according to the invention for doses 1 including a hole and a functional layer 20 arranged parallel to the axis of the hole. In these embodiments, the support element 11 is inserted in the hole in the dose 1.

Figure 43 shows an example of a method of encapsulation which deforms the dose 1 radially by means of a deformation element 12.

Naturally, the principle of encapsulation of a dose 1 comprising a hole as shown in Figures 41 to 43 may be applied during transfer of the dose 1 in the transport means and/or in a mould, after the transfer, with the means arranged as described and shown in the present application.

In all of the embodiments, the relative positions of the mould 5 and of the punch 4, or of the transfer system, are illustrative and the whole may be rotated by 180°: the mould may be above the punch or it is the punch which is above the mould. Likewise, the relative movement for obtaining the effect of compression-moulding may be achieved by a movement of the punch towards the mould, or vice versa, or by a movement of each of the two towards one another.

The encapsulation elements 6, 16 may be removed by sliding, or in another appropriate manner.

In all of the embodiments, the encapsulation method may be performed in the moulding device or in the transport device.

Any materials may be used to form the layers 20, 20', 21, 22, 22' of the dose 1: synthetic materials, materials based on cellulose, etc., said materials being suitable for being shaped in a mould which may be heated and/or cooled.

Embodiments have been described to facilitate a general understanding of the principles of the structure, the operation, the manufacturing and the use of the systems and methods described in the present application. One or more of these embodiments are shown in the appended drawings. The systems and methods specifically described in the present application and shown in the appended drawings are non-limiting embodiments and the scope of the present invention is not defined only by the claims. The features illustrated or described in relation to one embodiment may be combined with the features of other embodiments. Such modifications and variants are intended to be included in the scope of the present invention. A given number of problems encountered with conventional methods and systems are mentioned herein and the methods and systems described herein may solve one or more of these problems. Furthermore, while this invention has been described together with a given number of embodiments, the alternatives, modifications, equivalents and variants which fall within the spirit and the scope of the present invention are also covered by the present application.

## Claims

1. Method for covering at least the periphery of a functional layer by a first layer, said layers being included in a multilayer dose intended to form an object by compression-moulding, said method comprising at least the following steps:
- ) deformation of the dose;
- ) at the same time as the deformation of the dose, temporary blocking of the propagation at least of the functional layer so as to form a bead of material from the first layer by propagation of material;
- ) ceasing the temporary blocking.

2. Method according to Claim 1, wherein the deformation is produced by compression of the dose.

3. Method according to Claim 2, wherein the compression of the dose is carried out over the whole surface of the dose or over a portion of the surface.

4. Method according to either of Claims 2 or 3, wherein the direction of compression intersects a plane parallel to the functional layer.

5. Method according to Claim 1, wherein the deformation of the dose is carried out by heating at least the first layer.

6. Method according to one of the preceding claims, wherein said steps are carried out during transfer of the dose by transport means and/or once the dose has been deposited in a device for compression-moulding.

7. Method according to one of the preceding claims, wherein an additional step of deformation of the dose is carried out prior to the joint steps of deformation and temporary blocking.

8. Method according to one of the preceding claims, wherein deformation of the dose is continued after temporary blocking ceases, to form an object.

9. Method according to Claim 8, wherein the deformation is a compression-moulding.

10. Method according to one of the preceding claims, wherein the dose comprises at least two functional layers and/or the functional layer forms a significant proportion of the dose.

11. Method according to the preceding claim, wherein the functional layer is a barrier layer and/or a layer made of recycled material.

12. Method according to one of the preceding claims, wherein the functional layer(s) is (are) entirely covered at least by the first layer.

13. Method according to one of the preceding claims, wherein the temporary blocking means are located on the transport means and/or on the punch and/or on the mould.

14. Method according to one of the preceding claims, wherein the deformation of the dose is carried out by a punch and a mould at least during the compression-moulding for obtaining the object.

15. Device for implementing the method according to one of the preceding claims, intended to form an object from a multilayer dose of materials, said dose comprising at least one functional layer (20, 20') and a first layer (21), said device comprising means for transporting the dose (10,11), means for deforming the dose (4, 5, 12), means (4,5) for applying compression-moulding to the dose (1) and means (6,16) for temporarily blocking the propagation of the functional layer (20,20') at least during the deformation of the dose.

16. Device according to Claim 15, wherein the means for deforming the dose (11,12) and the means for temporarily blocking the propagation of the functional layer (6,16) are located on the transport means (10).

17. Device according to Claim 15 or 16, wherein the means for temporarily blocking the propagation of the functional layer are located on the mould (5) and/or on the punch (4).

18. Device according to Claim 17, wherein the punch (4) comprises an internal portion and an external portion, said portions being movable relative to one another so as to form said means for temporarily blocking the propagation of the functional layer.
